# EUROPÄISCHE PATENTSCHRIFT

(11) **EP 3 623 255 B1**
(45) Veröffentlichungstag und Bekanntmachung des Hinweises auf die Patenterteilung: **09.08.2023**
(21) Anmeldenummer: 19197537.4
(22) Anmeldetag: 16.09.2019
(51) Int. Cl.: B61L 5/10, B61L 27/53

(54) **VERFAHREN UND ANORDNUNG ZUR ENDLAGENÜBERWACHUNG EINER WEICHE**
METHOD AND ASSEMBLY FOR MONITORING A FINAL POSITION OF A RAILWAY SWITCH
PROCÉDÉ ET DISPOSITIF POUR LA SURVEILLANCE DE LA POSITION FINALE D'UN AIGUILLAGE

(30) Priorität: 17.09.2018 DE 102018122766
(43) Veröffentlichungstag der Anmeldung: 18.03.2020
(73) Patentinhaber: Voestalpine Signaling Sainerholz GmbH, 56244 Ötzingen-Sainerholz (DE)
(72) Erfinder: PÜTZ, Holger, 56276 Grossmaischeid (DE)
(74) Vertreter: Stoffregen, Hans-Herbert

(56) Entgegenhaltungen:
- WO-A1-02/090166
- AT-A1- 509 241
- FR-A1- 2 745 543
- NEUNER K: "BEDEUTUNG MODULAR AUFGEBAUTER DIAGNOSEEINRICHTUNGEN", SIGNAL UND DRAHT: SIGNALLING & DATACOMMUNICATION, EURAILPRESS, DE, Bd. 98, Nr. 1/02, 1. Januar 2006 (2006-01-01), Seiten 62-66, XP001239353, ISSN: 0037-4997
- KLEIN S ET AL: "SICAS S5 - STELLWERKE LIGHT", SIGNAL UND DRAHT: SIGNALLING & DATACOMMUNICATION, EURAILPRESS, DE, Bd. 87, Nr. 9, 1. September 1995 (1995-09-01), Seiten 290-295, XP000723329, ISSN: 0037-4997

## Beschreibung

Die Erfindung bezieht sich auf ein Verfahren zur Endlagenüberwachung durch Erfassung und Auswertung von Schaltmitteln, wie Endlagenschaltern, oder einer Gruppe von Schaltmitteln, die in ein oder mehreren entlang eines beweglichen Bauteils, wie Weiche, einer Gleisanlage angeordneten Stell- und/oder Prüfereinheiten angeordnet sind und in Abhängigkeit von der Position des beweglichen Bauteils, wie Weiche, geschaltet werden, wobei nach dem Erreichen einer Endlage ein Endsignal erzeugt wird, wobei Schaltzustände der Schaltmittel oder Gruppe von Schaltmitteln in den jeweiligen Stell- und/oder Prüfereinheiten mittels eines Buskopplers in ein digitales Signal mit einer dem jeweiligen Schaltmittel oder der Gruppe von Schaltmitteln zugeordneten individuellen Adresse transformiert werden, und dass die Schaltzustände aller Schaltmittel oder Gruppen von Schaltmitteln in Form digitaler Signale über ein signaltechnisch sicheres Bussystem in ein Master-Modul gesendet werden.

Ferner bezieht ich die Erfindung auf eine Anordnung zur Endlagenüberwachung durch Erfassung und Auswertung von Schaltmitteln, wie Endlagenschaltern, oder einer Gruppe von Schaltmitteln, die in ein oder mehreren entlang eines beweglichen Bauteils, wie Weiche, einer Gleisanlage angeordneten Stell- und/oder Prüfereinheiten angeordnet sind und in Abhängigkeit von der Position des beweglichen Bauteils, wie Weiche, geschaltet werden, wobei nach dem Erreichen einer Endlage ein Endsignal erzeugt wird, wobei die Schaltmittel oder Gruppen von Schaltmitteln über einen Buskoppler mit einem signaltechnisch sicheren Bussystem gekoppelt sind, wobei jedem Schaltmittel oder jeder Gruppe von Schaltmitteln eine individuelle Adresse zugeordnet ist, wobei die Buskoppler über eine Busleitung mit einem Master-Modul verbunden sind und Schaltzustände der angeschlossenen Schaltmittel oder Gruppe von Schaltmittel in Form eines digitalen Signals mit der individuellen Adresse an das Master-Modul senden.

Ein Verfahren und eine Anordnung der eingangs genannten Art ist aus der AT 509241 A1 bekannt. Beschrieben ist ein Verfahren und eine Vorrichtung zur Fehlererkennung in Überwachungseinrichtungen von Schienenweichen. Die Überwachungseinrichtung weist in Abhängigkeit von der Position der Weiche geschaltete Kontakte auf, über welche sich nach dem Erreichen einer Endlage ein Überwachungsstromkreis schließt, wobei eine Mehrzahl von in Schienenlängsrichtung versetzt angeordneten Überwachungsebenen vorgesehen ist, in jeder Überwachungsebene eine Mehrzahl von Schaltkontakten angeordnet ist und die Schaltkontakte mehrere Überwachungsebenen über wenigstens zwei, bevorzugt drei Leiter derart miteinander verschaltet sind, dass in den jeweiligen Endlagen die geschlossenen Schaltkontakte der miteinander verbundenen Überwachungsebenen zur Ausbildung eines Überwachungsstromkreises in Serie geschaltet sind. Zwischen benachbarten Überwachungsebenen ist je eine Prüfeinrichtung angeordnet, in der jeweils wenigstens ein Spannungsabfall zwischen den Leitern hochohmig abgegriffen und eine Strommessung an wenigstens einem Leiter vorgenommen wird.

Die WO 02/090166 A1 betrifft ein System zur Überwachung des Zustands einer Eisenbahnanlage, wie beispielsweise eines Weichenantriebs. Das System umfasst eine Vielzahl von Sensoren, die mit Elementen der Anlage verbunden sind, um Parameter zu überwachen, die die Betriebsfähigkeit der Anlage anzeigen. Das System umfasst Mittel zur Verarbeitung der überwachten Parameter um zu bestimmen, ob die Parameter sich relativ zu Referenzwerten verändern und um zu bestimmen, ob die Änderungen ein Anzeichen für ein hohes Risiko einer Fehlfunktion der Anlage sind. Die Verarbeitungsmittel können einen digitalen Computer umfassen, der mit einer Betriebsbedingungen überwachenden und Fehlfunktion aufdeckenden Software programmiert ist.

Jeder Sensor wird für sich überwacht. Eine digitale Verknüpfung von Zuständen einzelner Sensoren erfolgt nicht.

Die FR 2745543 A1 betrifft ein Fernüberwachungssystem, welches für jedes Gleisgerät über eine Vielzahl von Wandlern verfügt, die charakteristische Parameter messen. Die Wandler sind mit einer zentralen Datenerfassungseinheit verbunden, die einen Algorithmus zur Verwaltung der Datenerfassung ausführt. Die erfassten Daten werden einzeln mit einem Schwellwert verglichen, der einen Grenzwert für diesen bestimmten Parameter darstellt. Ein Detektor, der die Durchfahrt eines Zuges anzeigt, kann das Senden eines Datenwertes auslösen, der bei der Durchfahrt des Zuges aufgenommen wird.

Der Artikel von Klaus Neuner "Bedeutung modular aufgebauter Diagnoseeinrichtungen", SIGNAL + DRAHT (98) 1+ 2/2006 behandelt Diagnoseeinrichtungen und die sich durch den Einsatz solcher Systeme ergebenden Möglichkeiten in Bezug auf Ferndiagnose, Überwachung, Fehlerlokalisierung im Störfall und zustandsorientierte Wartung, sowie die dadurch möglichen Verfügbarkeitssteigerungen. Betreffend die Datenerfassung wird ausgeführt, dass diese wahlweise durch Messung des Weichenstroms im Stellwerk oder durch Erfassung von physikalischen Weichenparametern im Außenbereich erfolgen kann. Bei der Datenerfassung im Außenbereich werden durch Sensoren die Weichenstellkraft, die Endlage der Weichenzungen und der Mindestdurchgang zwischen Backenschiene und Weichenzunge erfasst.

Der Artikel von Stephan Klein u.a.: "SICAS S5 - Stellwerke Light" aus SIGNAL + DRAHT (87), 1995, betrifft die Überwachung von Weichen und Signalen mittels sicherer SIMA-TIC^{®} SS-Rechnern. Dabei wird eine Gleisfreimeldung mittels Achszählern vorgenommen.

In der DE 10 2011 109 975 A1 ist eine Schaltung und ein Verfahren zur sicheren Überwachung von Weichenantrieben unter Anwendung von Standard-Industriekomponenten "Commercial Off-The-Shelf (COTS)" beschrieben. Die Schaltung soll für beliebige Anschaltarten von gängigen Weichenantrieben mit einem Schalterpaket von vier Endlagenschaltern geeignet sein. Das Ergebnis der Weichenlageninformation wird aus zwei voneinander unabhängigen, zeitlich versetzten Abfragen des Zustandes des Schalterpakets im Weichenantrieb gebildet. Die Unabhängigkeit der Abfragen wird über zwei getrennte Kanäle A und B realisiert, die jeweils einen eigenen Ausgang und zwei getrennte Eingänge aufweisen. Eine logische Analyse des bei den zwei Abfragen generierten Meldebilds über das Vorhandensein der Überwachungsspannung liefert die gegenwärtige Lage der Weiche.

In der DE 10 2009 023 262 A1 ist eine Schaltung zur Überwachung von Endlagenschaltern eines 4-Draht-Drehstrom-Antriebs einer Weiche beschrieben. Hierbei werden die Schaltstellungen der vier Endlagenschalter der Weiche mit Hilfe eines kontinuierlichen Gleichspannungs-Überwachungspotentials überwacht. Die Überwachungsspannung wird mit gegensätzlicher Polarität an die Anschlusspunkte V und MP einer 4-Draht-Schaltung für den Weichenantrieb gelegt. Je nach Stellung der Endlagenschalter des Weichenantriebs unterscheidet sich die von der Überwachungsspannung herrührende, zwischen den Anschlusspunkten U und W abgreifbare Potentialdifferenz. Die unterschiedlichen Potentialdifferenzen werden mithilfe einer Auswertelogik erfasst und ausgewertet.

Die US 2004/0167686 A1 betrifft ein System zum Überwachen des Zustands einer Eisenbahnanlage. Das System weist mehrere Sensoren auf, die Elementen der Anlage zugeordnet sind, um Parameter zu überwachen, die die Betriebsfähigkeit der Anlage anzeigen. Das System enthält Mittel zum Verarbeiten der überwachten Parameter, um zu bestimmen, ob sich die Parameter relativ zu Referenzwerten ändern und um zu bestimmen, ob die Änderungen ein erhöhtes Risiko einer Fehlfunktion in der Anlage anzeigen. Das Verarbeitungsmittel kann einen Computer umfassen, der mit Zustandsüberwachungs- und Fehlererkennungssoftware programmiert ist. Ein Verfahren zum Überwachen des Zustands einer Eisenbahnanlage ist ebenfalls offenbart.

Bei den zuvor genannten Weichenantrieben wird die Überwachung der ordnungsgemäßen Endlage mit verschiedenartigen Endlagenschaltern realisiert. Meistens kommen mechanische Kontakte, z.B. Schnappschalter, zum Einsatz. Es ist in jedem Fall ein signaltechnisch sicherer Schaltzustand zu gewährleisten.

Zudem werden Weichen mit steigendem Radius mit zusätzlichen Verschluss- und Prüferebenen ausgerüstet. Dadurch steigt auch die Zahl der in einer Weiche verbauten Endlagenschalter mit gleichem Multiplikator an. Zur Überwachung der Endlage können die Endlagenschalter in Reihe miteinander verbunden werden. Im Falle einer Störung ist die Fehlersuche entsprechend aufwendig, da jeder Endlagenschalter zumindest auf korrekte Funktion geprüft werden muss.

Bahnbetreiber limitierten daher die maximal erlaubte Anzahl von verbundenen Ebenen oder überwachen jede Ebene separat. Dadurch soll die Zeit zur Reparatur des Systems und folglich die Zeit der Streckensperrung reduziert werden.

Die bekannten Anordnungen zur Endlagenüberwachung haben ferner den Nachteil, dass zur Bedienung verschiedener Stellwerksbauformen individuelle Kabelbäume und Schalterkombinationen erforderlich sind.

Betreffend Diagnose und Monitoring ist anzumerken, dass derzeit jeweils nur der Weichenantrieb in einer Weiche überwacht wird, insbesondere per Stellstrommessung im Stellwerk. Auch können durch zusätzliche Sensoren im Weichenantrieb oder der Weiche Daten in einem von dem System der Endlagenüberwachung komplett getrennten System gesammelt und ausgewertet werden. Die Prüferebenen und sekundären Stell- und Verschlussebenen bleiben dabei unberücksichtigt und werden nach dem Stand der Technik nicht in eine Diagnose eingebunden. Die gesammelten Daten sind daher unvollständig und lassen keine genauen Rückschlüsse auf den Zustand und die prognostizierte Verfügbarkeit zu.

Davon ausgehend liegt der vorliegenden Erfindung die Aufgabe zugrunde, ein Verfahren und eine Anordnung der eingangs genannten Art derart weiterzubilden, dass die Überwachung der Endlagenschalter vereinfacht, insbesondere der Verdrahtungsaufwand reduziert und die Fehlersuche sowie Instandsetzung vereinfacht wird.

Des Weiteren liegt der Erfindung die Aufgabe zugrunde, die Diagnose und das Monitoring von Weichenantrieben, Prüferebenen und/oder sekundären Stell- und Verschlussebenen zu verbessern.

Die Aufgabe wird erfindungsgemäß durch ein Verfahren mit den Merkmalen des Anspruchs 1 gelöst. Die digitalen Signale der jeweiligen Schaltmittel oder Gruppe von Schaltmitteln werden elektronisch zu dem sicheren Endlagensignal verknüpft.

Ferner wird die Aufgabe erfindungsgemäß durch eine Anordnung mit den Merkmalen des Anspruchs 6 gelöst. Das Master-Modul ist ausgebildet, um die digitalen Signale zu dem Endlagensignal zu verknüpfen.

Ein Aspekt der Erfindung ist eine digitale Endlagenüberwachung. Die digitale Endlagenüberwachung umschreibt ein Verfahren und eine Anordnung zur zentralen Erfassung und Auswertung einer oder mehrerer Stell- und/oder Prüfereinheiten, z. B. in einer Weiche, in einem beweglichen Herzstück oder in einem anderen beweglichen Bauteil zur Spurführung mittels eines signaltechnisch sicheren Bussystems.

Zur digitalen Endlagenüberwachung werden elektronisch miteinander verknüpfte Schaltmittel eingesetzt. Die in einer Stell- und/oder Prüfereinheit angeordneten und in Abhängigkeit von der Position des beweglichen Teils, wie Weiche, geschalteten Schaltmittel, wie Endlagenschalter, werden gemäß der Erfindung in ein Bussystem eingebunden, wie eingekoppelt. Dabei ist jedem Schaltmittel oder einer Gruppe von Schaltmitteln eine individuelle Adresse zugeordnet. Das Bussystem ist vorzugsweise in sicherheitsgerichteter Technik, wie AS-I-Bus, ausgebildet.

Besonders bevorzugt ist zu erwähnen, dass die Stell- und/oder Prüferebenen bei der erfindungsgemäßen Anordnung immer über einen baugleichen Kabelbaum miteinander verbunden sind, wodurch die Ersatzteilvielfalt beim Kunden reduziert wird und erhebliche Vereinfachungen im Fertigungsprozess möglich werden.

Die Wahl der Bauform der Schaltmittel ist unerheblich. Vorzugsweise werden die Schaltmittel als aktive Schaltmittel mit vorzugsweise integriertem Buskoppler oder als passive Schaltmittel, wie Schaltkontakte, über einen Buskoppler, wie Slave-Modul, in das Bussystem eingekoppelt.

Gemäß einer bevorzugten Ausführungsform sind alle in einer Weiche verbauten Stell- und/oder Prüfereinheiten mit baugleichen Schaltmitteln ausgerüstet und verfügen über eine standardisierte Schnittstelle, die vorzugsweise als steckbare Verbindung ausgeführt ist.

Vorzugsweise ist das Schaltmittel in Form eines Schaltkontaktes oder die Gruppe von Schaltmitteln, wie eine Reihenschaltung von Kontakten, mit einem Eingang des Buskopplers verbunden, so dass der Buskoppler eingangsseitig den Schaltzustand des Schaltmittels oder der Gruppe von Schaltmitteln erfassen kann.

Entsprechend des Schaltzustandes des Schaltmittels oder der Gruppe von Schaltmitteln wird durch den Buskoppler ausgangsseitig ein sicheres, dem Schaltmittel oder der Gruppe von Schaltmitteln durch die individuelle Adresse zugeordnetes Signal erzeugt, welches über eine Busleitung des Bussystems an ein Master-Modul gesendet wird.

In dem Master-Modul werden die Schaltzustände aller Schaltmittel oder Gruppen von Schaltmitteln gleichwertig ausgewertet und zu einem sicheren Endlagensignal verarbeitet bzw. verknüpft. Die Verarbeitung bzw. Verknüpfung der Schaltzustände umfasst auch die Überprüfung der zeitlichen Abfolge von Schaltzuständen der Schaltmittel. Sollte ein Schaltmittel defekt sein oder nicht die erwartete Endlage anzeigen, kann über die Identifizierung per Adresse auf einfache Weise das defekte Schaltmittel ermittelt werden.

Das an einem Ausgang des Master-Moduls anliegende sichere Endlagensignal kann auf verschiedene Art und Weise weiterverarbeitet werden. Das sichere Endlagensignal kann z. B. unmittelbar durch eine Stellwerksteuerung weiterverarbeitet werden.

Sollte das Sicherheitslevel des verwendeten Bussystems den Anforderungen eines Bahnbetreibers nicht genügen, so kann in einer bevorzugten Ausführungsform die erste Stellebene mit zusätzlichen, herkömmlichen Endlagenschaltern ausgerüstet werden, wobei das sichere Endlagensignal des Master-Moduls über die Endlagenschalter der ersten Stellebene in Form einer UND-Verknüpfung an die Stellwerksteuerung geleitet wird.

Sollte das sichere Endlagensignal des Master-Moduls durch die Stellwerksteuerung nicht verarbeitet werden können, kann das sichere Endlagensignal über eine Schnittstelle an die Stellwerksteuerung angekoppelt werden. Die Schnittstelle kann in Form einer Simulationsschaltung realisiert sein. Durch das sichere Ausgangssignal des Master-Moduls oder das Ausgangssignal der Und-Verknüpfung werden sichere elektronische oder elektromechanische Kontakte in der Simulationsschaltung betätigt, die passend zur einer Anschaltbaugruppe des Schaltwerks ausgerichtet sind. Folglich erhält das Stellwerk die gleiche Information als sei ein einziger Weichenantrieb angeschlossen.

Zusätzliche Komponenten zur Überwachung der einzelnen Schaltmittel oder Gruppen von Schaltmitteln entfallen. Im Falle einer Störung gibt eine Diagnosefunktion des Master-Moduls Auskunft über die oder den nicht ordnungsgemäß betätigten Schalter.

Gemäß einem eigenerfinderischen Aspekt der Erfindung können Sensoren, wie Diagnosesensoren, unterschiedlicher Bauart in das Bussystem eingebunden werden. Dadurch wird das für die digitale Endlagenüberwachung sicherheitsgerichtete System auch für die Übertragung nicht sicherheitsgerichteteter Diagnosefunktionen nutzbar. Zusätzliche Hardware zur Kommunikation oder Sammlung der Daten ist nicht erforderlich.

Das Master-Modul kann die Daten auswerten oder an einen Server zur Auswertung weiterleiten. Diverse Schnittstellen stehen dafür zur Verfügung. Dadurch wird die Aufnahme von Daten in jeder Stell- und/oder Prüferebene in einer Weiche möglich. Die Datenmenge und -qualität steigt massiv an und die Prognosequalität zur Einführung einer prädiktiven Instandhaltung ist gewährleistet. Die Rechenmodelle für die prädiktive Wartung benötigen eine große Menge an verschiedenen Daten, um genau arbeiten zu können. Dies ist mit einer Strommessung nach dem Stand der Technik nicht möglich.

Die Erfindung wird durch die Ansprüche definiert.

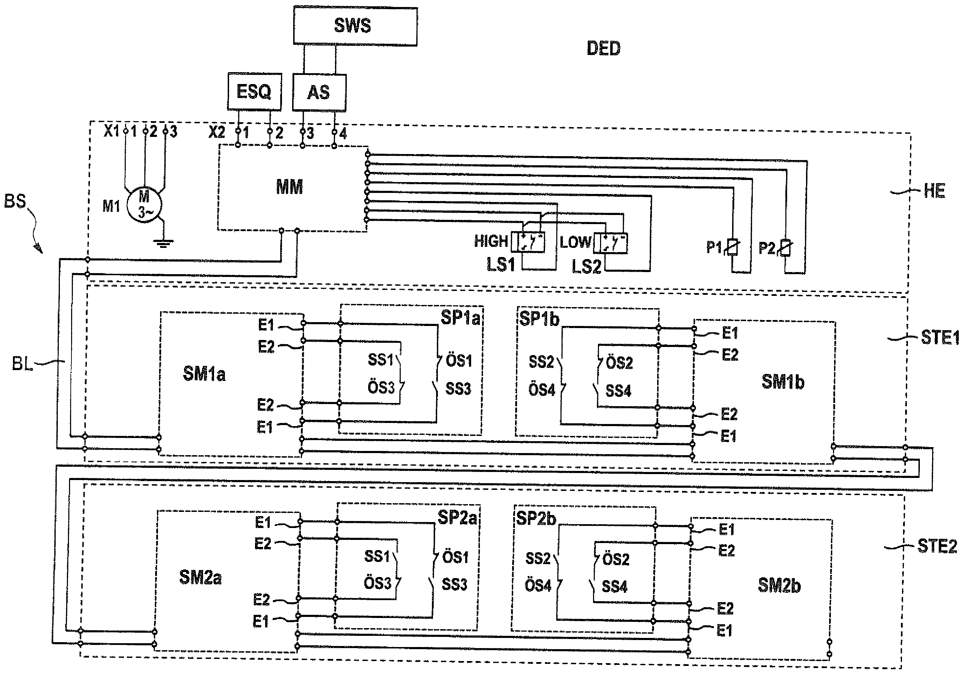

Die einzige Figur zeigt eine Anordnung DED zur digitalen Endlagenüberwachung von Stell- und/oder Prüfereinheiten STE1, STE2, z. B. eines beweglichen Bauteils zur Spurführung, wie Weiche, einer gleistechnischen Anlage (nicht dargestellt) mittels eines signaltechnisch sicheren Bussystems BS.

In den Stell- und/oder Prüfereinheiten STE1, STE2 sind jeweils zwei Schaltmittel bzw. Gruppen von Schaltmitteln SP1a, SPlb bzw. SP2a, SP2b angeordnet, die in Abhängigkeit von der Position des beweglichen Bauteils, wie Weiche, geschaltet werden.

Gemäß der Erfindung sind die Schaltmittel SP1a, SPlb bzw. SP2a, SP2b jeweils über einen Buskoppler in Form eines Slave-Moduls SM1a, SM1b bzw. SM2a, SM2b mit einer Busleitung BL des Bussystems BS gekoppelt, wobei die Busleitung mit einem Master-Modul MM verbunden ist. Die Schaltmittel SP1a, SPlb bzw. SP2a, SP2b sind jeweils mit einem Eingang E1, E2 des Slave-Moduls verbunden, so dass ein Schaltzustand des angeschlossenen Schaltmittels ausgewertet und als Signal über die Busleitung an das Master-Modul MM gesendet werden kann.

Jedem Schaltmittel oder jeder Gruppe von Schaltmitteln, die an einem der Eingänge E1, E2 der Slave-Module angeschlossen sind, wird eine individuelle Adresse zugeordnet, so dass auch die Signale eindeutig den Schaltmitteln zugeordnet werden können. Sollte ein Schaltmittel defekt sein oder nicht die erwartete Endlage anzeigen, ist über die individuelle Adresse eine Identifizierung des Schaltmittels möglich.

Das Master-Modul MM ist zur Spannungsversorgung mit einer externen Spannungsquelle ESQ verbunden. Die in den Stell- und/oder Prüfereinheiten STE1, STE2 angeordneten Slave-Module SM1a, SM1b bzw. SM2a, SM2b sind in Reihe in die Busleitung BL eingekoppelt und werden über die Busleitung BL mit Spannung versorgt. Die Busleitung kann als 2-adrige Busleitung gemäß AS-1 in sicherheitsgerichteter Technik ausgebildet sein.

Die Schaltmittel sind im dargestellten Ausführungsbeispiel als Schalterpakete SP1a, SPlb bzw. SP2a, SP2b ausgeführt, in denen exemplarisch jeweils zwei Schalter S1, S3 bzw. S2, S4 in Form von Sicherheits-Schnappschaltern in Reihe geschaltet sind. Dabei ist ein Schließer SS1 des Schalters S1 mit einem Öffner ÖS3 des Schalters S3 und ein Öffner ÖS1 des Schalters S1 mit einem Schließer SS3 des Schalters S3 in Reihe geschaltet. Gleiches gilt für die Schließer SS2 und SS4 bzw. Öffner OS2 und ÖS4 der Schalter S2 und S4. Jeweils eine Reihenschaltung aus Schließer und Öffner ist mit einem der Eingänge E1, E2 der Slave-Module SM1a, SM1b bzw. SM2a, SM2b verbunden.

Das Master-Modul MM wertet alle Schaltzustände aller Slave-Module SM1a, SM1b; SM2a, SM2b aus und verarbeitet diese zu einem sicheren Endsignal, welches an digitalen Ausgängen "links" und "rechts" anliegt und weiterverarbeitet werden kann.

Im dargestellten Ausführungsbeispiel wird das sichere Endsignal über eine Adapter- oder Simulationsschaltung AS an eine Stellwerksteuerung SWS weitergeleitet. In der Simulationsschaltung AS sind ansteuerbare elektronische oder elektromechanische Kontakte integriert, die passend zur Anschaltbaugruppe des Stellwerks ausgerichtet sind. Das Stellwerk erhält die gleiche Information als sei ein Weichenantrieb angeschlossen.

Neben der Verwendung zur Endlagenauswertung können auch analoge oder digitale Sensoren, wie Füllstandsensoren LS1, LS2 oder Drucksensoren P1, P2, in das Bussystem BS eingebunden werden. Die Sensoren LS1, LS2, P1, P2 sind mit Eingängen des Master-Moduls MM oder mit Eingängen E1, E2 der Slave-Module verbunden. Dadurch ist eine genaue Diagnose des Zustands des Systems möglich. Durch die erfindungsgemäße Anordnung kann die Erfassung der Zustandsdaten direkt in den Stell- und Prüfsystemen STE1, STE2 erfolgen, die verteilt über das bewegliche Bauteil, wie Weiche, eingebaut werden können. Folglich kann die gesamte Information über Lage und Diagnose über ein und dieselbe Busleitung BL übertragen werden.

## Patentansprüche

1. Verfahren zur Endlagenüberwachung durch Erfassung und Auswertung von Schaltmitteln (SPla, SPlb; SP2a, SP2b), wie Endlagenschaltern oder einer Gruppe von Schaltmitteln, die in ein oder mehreren entlang eines beweglichen Bauteils, wie Weiche, einer Gleisanlage angeordneten Stell- und/oder Prüfereinheiten (STE1, STE2) angeordnet sind und in Abhängigkeit von der Position des beweglichen Bauteils, wie Weiche, geschaltet werden, wobei nach dem Erreichen einer Endlage ein Endlagensignal erzeugt wird, wobei die Schaltzustände der Schaltmittel (SPla, SPlb; SP2a, SP2b) oder Gruppe von Schaltmitteln in den jeweiligen Stell- und/oder Prüfereinheiten (STE1, STE2) mittels eines Buskopplers (SM1a, SM1b; SM2a, SM2b) in ein digitales Signal mit einer dem jeweiligen Schaltmittel (SPla, SPlb; SP2a, SP2b) oder der Gruppe von Schaltmitteln zugeordneten individuellen Adresse transformiert werden, und wobei die Schaltzustände aller Schaltmittel (SPla, SPlb; SP2a, SP2b) oder Gruppen von Schaltmitteln in Form digitaler Signale über ein signaltechnisch sicheres Bussystem (BS) in ein Master-Modul (MM) gesendet werden,
**dadurch gekennzeichnet,**
**dass** die digitalen Signale der jeweiligen Schaltmittel (SPla, SPlb; SP2a, SP2b) oder Gruppe von Schaltmitteln elektronisch zu dem sicheren Endlagensignal verknüpft werden.

2. Verfahren nach Anspruch 1,
**dadurch gekennzeichnet,**
**dass** das sichere Endlagensignal durch eine logische UND-Verknüpfung mit zumindest einem in einer Stell- und/oder Prüfereinheit (STE1, STR2) einer ersten Stellebene installierten zusätzlichen, herkömmlichen mechanischen Endlagenschalter verknüpft und einem Eingang einer Stellwerksteuerung (SWS) bereitgestellt wird.

3. Verfahren nach Anspruch 2,
**dadurch gekennzeichnet,**
**dass** das sichere Endlagensignal mittels einer Simulationsschaltung (AS) an eine Anschaltbaugruppe der Stellwerksteuerung (SWS) angepasst wird.

4. Verfahren nach zumindest einem der vorhergehenden Ansprüche,
**dadurch gekennzeichnet,**
**dass** das Master-Modul (MM) die Schaltzustände aller Endlagenschalter (SPla, SPlb; SP2a, SP2b) gleichwertig auswertet und zu dem sicheren Endlagensignal verarbeitet.

5. Verfahren nach zumindest einem der vorhergehenden Ansprüche,
**dadurch gekennzeichnet,**
**dass** zusätzlich zu den Schaltmitteln (SPla, SP1b; SP2a, SP2b) Diagnosesensoren (LS1, LS2; P1, P2), wie Füllstands-, Druck-, Temperatur-, Vibrations- und/oder Feuchtigkeitssensoren, über Buskoppler in das Bussystem (BS) eingekoppelt werden, wobei das sicherheitsgerichtete Bussystem (BS) sowohl zur Übertragung von sicherheitsgerichteten Endlage-Signalen als auch zur Übertragung nicht sicherheitsgerichteter Diagnose-Signale verwendet wird.

6. Anordnung (DED) zur Endlagenüberwachung durch Erfassung und Auswertung von Schaltmitteln (SP1a, SP1b; SP2a, SP2b), wie Endlagenschaltern, oder einer Gruppe von Schaltmitteln, die in ein oder mehreren entlang eines beweglichen Bauteils, wie Weiche, einer Gleisanlage angeordneten Stell- und/oder Prüfereinheiten (STE1, STE2) angeordnet sind und in Abhängigkeit von der Position des beweglichen Bauteils, wie Weiche, geschaltet werden, wobei nach dem Erreichen einer Endlage ein Endlagensignal erzeugt wird, wobei die Schaltmittel (SP1a, SPlb; SP2a, SP2b) oder Gruppen von Schaltmitteln über einen Buskoppler (SM1a, SM1b; SM2a, SM2b) mit einem signaltechnisch sicheren Bussystem (BS) gekoppelt sind, wobei jedem Schaltmittel (SPla, SPlb; SP2a, SP2b) oder jeder Gruppe von Schaltmitteln eine individuelle Adresse zugeordnet ist, wobei die Buskoppler (SM1a, SM1b; SM2a, SM2b) über eine Busleitung (BL) mit einem Master-Modul (MM) verbunden sind und Schaltzustände der angeschlossenen Schaltmittel (SPla, SPlb; SP2a, SP2b) oder Gruppe von Schaltmitteln in Form eines digitalen Signals mit der individuellen Adresse an das Master-Modul (MM) senden
**dadurch gekennzeichnet,**
**dass** das Master-Modul (MM) ausgebildet ist, die digitalen Signale zu dem Endlagensignal zu verknüpfen.

7. Anordnung nach Anspruch 6,
**dadurch gekennzeichnet,**
**dass** das Schaltmittel (SPla, SPlb; SP2a, SP2b), wie Endlagenschalter, als ein aktives Schaltglied ausgebildet ist, wobei der Buskoppler (SM1a, SM1b; SM2a, SM2b) in dem Schaltmittel (SPla, SP1b; SP2a, SP2b) integriert ist.

8. Anordnung nach Anspruch 6,
**dadurch gekennzeichnet,**
**dass** das Schaltmittel (SP1a, SPlb; SP2a, SP2b), wie Endlagenschalter, als passives Schaltglied ausgebildet ist, wobei der Buskoppler (SM1a, SM1b; SM2a, SM2b) als ein Slave-Modul ausgebildet und das Schaltmittel mit einem Eingang des Slave-Moduls verbunden ist.

9. Anordnung nach Anspruch 8,
**dadurch gekennzeichnet,**
**dass** in einer Stelleinheit (STE1, STE2) jeweils ein Schalterpaket (SPla, SP2a) zur Erfassung einer "Endlage links" und ein Schalterpaket (SP1b, SP2b) zur Erfassung einer "Endlage rechts" angeordnet ist und wobei in den Schalterpaketen (SP1a, SPlb; SP2a, SP2b) jeweils zwei Schaltkontakte (SS1, ÖS3; ÖS1, SS3; SS2, ÖS4; ÖS2, SS4; SS1, ÖS3; ÖS1, SS3; SS2, ÖS4; ÖS2, SS4) in Reihe liegend an einem digitalen Eingang des Slave-Moduls angeschlossen sind und/oder dass die in Reihe liegenden Schaltkontakte gegenläufig montiert sind, wobei ein erster der Schaltkontakte bei Erreichen der jeweiligen Endlage und ein zweiter der Schaltkontakt bei Verlassen derselben Endlage betätigt wird.

10. Anordnung nach Anspruch 6,
**dadurch gekennzeichnet,**
**dass** ein digitaler Ausgang des Master-Moduls (MM) unmittelbar mit einem Eingang einer Stellwerksteuerung (SWS) verbunden ist und/oder dass ein digitaler Ausgang des Mastermoduls (MM) über eine Simulationsschaltung (AS) mit dem Eingang des Stellwerkrechners (SWS) verbunden ist und/oder dass der digitale Ausgang des Master-Moduls (MM) über einen mechanischen Endlagenkontakt einer ersten Stellebene (STE1) in UND-Verknüpfung mit dem Eingang der Stellwerksteuerung (SWS) verbunden ist.

## Claims

1. Method for final position monitoring by recording and evaluation of switching means (SPla, SPlb; SP2a, SP2b), such as final position switches, or of a group of switching means that are arranged in one or more operating and/or testing units (STE1, STE2) arranged along a movable component, such as a railway switch, of a track system and are switched depending on the position of the movable component, such as a railway switch, wherein a final position signal is generated after a final position is reached, wherein the switching states of the switching means (SP1a, SPlb; SP2a, SP2b) or of the group of switching means in the respective operating and/or testing units (STE1, STE2) are transformed by means of a bus coupler (SM1a, SM1b; SM2a, SM2b) into a digital signal with an individual address associated with the respective switching means (SPla, SPlb; SP2a, SP2b) or group of switching means, and wherein the switching states of all switching means (SP1a, SP1b; SP2a, SP2b) or of groups of switching means are transmitted in the form of digital signals via a bus system (BS) with fail-safe signaling to a master module (MM),
**characterized in**
**that** the digital signals of the respective switching means (SPla, SPlb; SP2a, SP2b) or group of switching means are electronically combined into the safe final position signal.

2. Method according to claim 1,
**characterized in**
**that** the safe final position signal is linked by a logical AND operation to at least one additional and conventional mechanical final position switch installed in an operating and/or testing unit (STE1, STR2) of a first operating level and provided at an input of a signal box control system (SWS).

3. Method according to claim 2,
**characterized in**
**that** the safe final position signal is adapted by means of a simulation circuit (AS) to a connection assembly of the signal box control system (SWS).

4. Method according to at least one of the preceding claims,
**characterized in**
**that** the master module (MM) evaluates the switching states of all final position switches (SPla, SPlb; SP2a, SP2b) equivalently and processes them to the safe final position signal.

5. Method according to at least one of the preceding claims,
**characterized in**
**that** in addition to the switching means (SP1a, SPlb; SP2a, SP2b) diagnostic sensors (LS1, LS2; P1, P2), such as level, pressure, temperature, vibration and/or moisture sensors, are coupled via bus couplers into the bus system (BS), wherein the safety-related bus system (BS) is used both for transmitting safety-related final position signals and for transmitting non-safety-related diagnostic signals.

6. Arrangement (DED) for final position monitoring by recording and evaluation of switching means (SPla, SPlb; SP2a, SP2b), such as final position switches, or of a group of switching means that are arranged in one or more operating and/or testing units (STE1, STE2) arranged along a movable component, such as a railway switch, of a track system and are switched depending on the position of the movable component, such as a railway switch, wherein a final position signal is generated after a final position is reached, wherein the switching means (SP1a, SPlb; SP2a, SP2b) or groups of switching means are coupled via a bus coupler (SM1a, SM1b; SM2a, SM2b) to a bus system (BS) with fail-safe signaling, wherein each switching means (SPla, SPlb; SP2a, SP2b) or each group of switching means is associated with an individual address, wherein the bus couplers (SM1a, SM1b; SM2a, SM2b) are connected via a bus line (BL) to a master module (MM) and transmit switching states of the connected switching means (SPla, SPlb; SP2a, SP2b) or of a group of switching means in the form of a digital signal with the individual address to the master module (MM),
**characterized in**
**that** the master module (MM) is designed to combine the digital signals into the final position signal.

7. Arrangement according to claim 6,
**characterized in**
**that** the switching means (SP1a, SP1b; SP2a, SP2b), such as a final position switch, is designed as an active switching element, wherein the bus coupler (SM1a, SM1b; SM2a, SM2b) is integrated in the switching means (SPla, SPlb; SP2a, SP2b).

8. Arrangement according to claim 6,
**characterized in**
**that** the switching means (SPla, SP1b; SP2a, SP2b), such as a final position switch, is designed as a passive switching element, wherein the bus coupler (SM1a, SM1b; SM2a, SM2b) is designed as a slave module and the switching means is connected to an input of the slave module.

9. Arrangement according to claim 8,
**characterized in**
**that** a switch packet (SPla, SP2a) for recording a "final position left" and a switch packet (SP1b, SP2b) for recording a "final position right" are arranged in each operating unit (STE1, STE2) and wherein in each switch packet (SPla, SPlb; SP2a, SP2b) two switch contacts (SS1, ÖS3; ÖS1, SS3; SS2, ÖS4; ÖS2, SS4; SS1, ÖS3; ÖS1, SS3; SS2, ÖS4; ÖS2, SS4) are connected in series to a digital input of the slave module and/or that switch contacts connected in series are mounted in the opposing direction, wherein a first of the switch contacts is operated on reaching the respective final position and a second of the switch contacts on leaving the same final position.

10. Arrangement according to claim 6,
**characterized in**
**that** a digital output of the master module (MM) is directly connected to an input of a signal box control system (SWS) and/or that a digital output of the master module (MM) is connected via a simulation circuit (AS) to the input of the signal box computer (SWS) and/or that the digital output of the master module (MM) is connected via a mechanical final position contact of a first operating level (STE1) to the input of the signal box control system (SWS) by an AND operation.

## Revendications

1. Procédé pour la surveillance de la position finale par détection et évaluation de moyens de commutation (SP1a, SP1b; SP2a, SP2b), tels que des commutateurs de fin de course ou un groupe de moyens de commutation qui sont disposés dans une ou plusieurs unités de commande et/ou de contrôle (STE1, STE2) disposées le long d'un élément mobile d'une installation de voie ferrée, tel qu'un aiguillage, et qui sont commutés en fonction de la position de l'élément mobile, tel qu'un aiguillage, sachant qu'un signal de fin de course est généré une fois la position finale atteinte, sachant que les état de commutation des moyens de commutation (SP1a, SP1b; SP2a, SP2b) ou du groupe de moyens de commutation dans les unités de commande et/ou de contrôle respectives (STE1, STE2) sont transformés au moyen d'un coupleur de bus (SM1a, SM1b; SM2a, SM2b) en un signal numérique avec une adresse individuelle affectée au moyen de commutation respectif (SPla, SPlb; SP2a, SP2b) ou au groupe de moyens de commutation, et sachant que les état de commutation de tous les moyens de commutation (SPla, SPlb; SP2a, SP2b) ou groupes de moyens de commutation sont envoyés sous forme de signaux numériques dans un module maître (MM) par l'intermédiaire d'un système de bus (BS) fiable sur le plan de la transmission des signaux,
**caractérisé en ce**
**que** les signaux numériques des moyens de commutation respectifs (SP1a, SP1b; SP2a, SP2b) ou du groupe de moyens de commutation sont associés par voie électronique pour former le signal de fin de course sécurisé.

2. Procédé selon la revendication 1,
**caractérisé en ce**
**que** le signal de fin de course sécurisé est associé via une combinaison logique ET à au moins un commutateur de fin de course mécanique conventionnel supplémentaire installé dans une unité de commande et/ou de contrôle (STE1, STR2) d'un premier niveau de réglage et est transmis à une entrée d'une commande d'un poste d'aiguillage (SWS).

3. Procédé selon la revendication 2,
**caractérisé en ce**
**que** le signal de fin de course sécurisé est adapté à un module de connexion de la commande d'un poste d'aiguillage (SWS) à l'aide d'un circuit de simulation (AS).

4. Procédé selon au moins l'une des précédentes revendications,
**caractérisé en ce**
**que** le module maître (MM) évalue de manière équivalente les états de commutation de tous les commutateurs de fin de course (SP1a, SPlb; SP2a, SP2b) et les traite pour obtenir un signal de fin de course sécurisé.

5. Procédé selon au moins l'une des précédentes revendications,
**caractérisé en ce**
**qu'**en complément des moyens de commutation (SP1a, SP1b; SP2a, SP2b), des capteurs de diagnostic (LS1, LS2; P1, P2), tels que des capteurs de niveau, de pression, de température, de vibration et/ou d'humidité, sont couplés dans le système de bus (BS) par l'intermédiaire de coupleurs de bus, sachant que le système de bus sécuritaire (BS) est utilisé aussi bien pour la transmission de signaux de fin de course sécuritaires que pour la transmission de signaux de diagnostic non sécuritaires.

6. Dispositif (DED) pour la surveillance de la disposition finale à l'aide de la détection et de l'évaluation des moyens de commutation (SPla, SPlb; SP2a, SP2b), tels que des commutateurs de fin de course, ou d'un groupe de moyens de commutation qui sont disposés dans une ou plusieurs unités de commande et/ou de contrôle (STE1, TE2) disposées le long d'un élément mobile, tel qu'un aiguillage, d'une installation de voie ferrée et qui sont commutés en fonction de la position de l'élément mobile, tel qu'un aiguillage, sachant qu'un signal de fin de course est généré une fois la position finale atteinte, sachant que les moyens de commutation (SP1a, SP1b; SP2a, SP2b) ou les groupes de moyens de commutation sont couplés au moyen d'un coupleur de bus (SM1a, SM1b; SM2a, SM2b) à un système de bus (BS) fiable sur le plan de la transmission des signaux, sachant qu'une adresse individuelle est affectée à chaque moyen de commutation (SPla, SPlb; SP2a, SP2b) ou chaque groupe de moyens de commutation, sachant que les coupleurs de bus (SM1a, SM1b; SM2a, SM2b) sont reliés à un module maître (MM) à l'aide d'une ligne de bus (BL) et envoient au module maître (MM) les états de commutation des moyens de commutation (SPla, SPlb; SP2a, SP2b) ou du groupe de moyens de commutation raccordés sous la forme d'un signal numérique avec l'adresse individuelle
**caractérisé en ce**
**que** le module maître (MM) est conçu pour associer les signaux numériques pour former le signal de fin de course.

7. Dispositif selon la revendication 6,
**caractérisé en ce**
**que** le moyen de commutation (SPla, SPlb; SP2a, SP2b), tel qu'un commutateur de fin de course, est conçu sous la forme d'un élément de commutation actif, sachant que le coupleur de bus (SM1a, SM1b; SM2a, SM2b) est intégré dans le moyen de commutation (SPla, SPlb; SP2a, SP2b).

8. Dispositif selon la revendication 6,
**caractérisé en ce**
**que** le moyen de commutation (SP1a, SP1b; SP2a, SP2b), tel qu'un commutateur de fin de course, est conçu sous la forme d'un élément de commutation passif, sachant que le coupleur de bus (SM1a, SM1b; SM2a, SM2b) est conçu sous la forme d'un module esclave et que le moyen de commutation est relié à une entrée du module esclave.

9. Dispositif selon la revendication 8,
**caractérisé en ce**
**qu'**un paquet de commutateurs (SPla, SP2a) pour la détection d'une "position de fin de course à gauche" et un paquet de commutateurs (SP1b, SP2b) pour la détection d'une "position de fin de course à droite" sont respectivement disposés dans une unité de commande (STE1, STE2) et sachant que, dans les paquets de commutateurs (SPla, SPlb; SP2a, SP2b), deux contacts de commutation (SS1, ÖS3; ÖS1, SS3; SS2, ÖS4; ÖS2, SS4; SS1, ÖS3; ÖS1, SS3; SS2, ÖS4; ÖS2, SS4) sont respectivement raccordés en série à une entrée numérique du module esclave et/ou que les contacts de commutation en série sont montés à l'opposé l'un de l'autre, sachant qu'un premier des contacts de commutation est actionné une fois la position finale respective atteinte et qu'un deuxième des contacts de commutation est actionné lorsqu'il quitte la même position finale.

10. Dispositif selon la revendication 6,
**caractérisé en ce**
**qu'**une sortie numérique du module maître (MM) est reliée directement à une entrée d'une commande d'un poste d'aiguillage (SWS) et/ou qu'une sortie numérique du module maître (MM) est reliée à l'entrée de commande d'un poste d'aiguillage (SWS) via un circuit de simulation (AS) et/ou que la sortie numérique du module maître (MM) est reliée à l'entrée de commande d'un poste d'aiguillage (SWS) via un contact de fin de course mécanique d'un premier niveau de réglage (STE1) en combinaison ET.
